# EUROPEAN PATENT SPECIFICATION

(11) **EP 4 477 431 B1**
(45) Date of publication and mention of the grant of the patent: **04.02.2026**
(21) Application number: 24181536.4
(22) Date of filing: 11.06.2024
(51) Int. Cl.: B60C 23/04, B60C 19/00

(54) **SENSOR DATA RETRIEVAL FROM RADIO FREQUENCY IDENTIFICATION (RFID) DEVICE**
SENSORDATENABRUF VON EINER VORRICHTUNG ZUR HOCHFREQUENZIDENTIFIKATION (RFID)
EXTRACTION DE DONNÉES DE CAPTEUR À PARTIR D'UN DISPOSITIF D'IDENTIFICATION PAR RADIOFRÉQUENCE (RFID)

(30) Priority: 14.06.2023 US 202363508002 P; 23.04.2024 US 202418642904
(43) Date of publication of application: 18.12.2024
(73) Proprietor: The Goodyear Tire & Rubber Company, Akron, OH 44316 (US)
(72) Inventor: RODEWALD, Stephan, Canal Fulton 44614 (US)
(74) Representative: Kutsch, Bernd

(56) References cited:
- US-A1- 2009 058 667
- US-A1- 2017 174 013
- US-A1- 2017 174 014
- US-B2- 10 414 217
- US-B2- 9 248 709
- US-B2- 9 764 605
- US-B2- 9 950 575

## Description

### TECHNICAL FIELD

This invention relates to a tire and to a method involving replacement of a tire sensor.

### BACKGROUND

Vehicles can be equipped with tire sensors mounted on a tire for each wheel on the vehicle to obtain information regarding physical parameters of the tire, such as, for example, tire pressure, temperature, and the like. The information obtained from the sensors can be used to detect potential issues with the tires that may result in unsafe driving conditions. For example, data obtained from a tire sensor may be used to detect an underinflated tire. Upon detection, the user of the vehicle can be notified of the underinflated tire through an indicator light in the dashboard of the vehicle. In various examples, the data obtained from the tire sensor may be associated with tire identification data and/or other information that is specific to a given tire.

US 2017/174014 A1 describes a tire in accordance with the preamble of claim 1.

Similar tires are also disclosed in US 9,950,575 B2, US 9,764,605 B2 and US 10,414,217 B2.

US 2017/174013 A1 concerns a pairing between an ID tag and a replaceable sensor and transmitting tire ID data.

US 9,248,709 B2 also describes transferring ID data from an ID tag to a sensor.

US 2009/058667 A1 describes a sensor mounting assembly for securing a sensor within a chamber between a wheel and a tire.

### SUMMARY OF THE INVENTION

The invention relates to a tire in accordance with claim 1, and to a method in accordance with claim 11.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a drawing of a vehicle with one or more tires that a sensor according to various embodiments of the present invention.
FIGS. 2 and 3 are perspective cross-sectional views of a tire shown in FIG. 1, where a sensor mount assembly is mounted on the inside of the tire 103 according to various embodiments of the present invention.
FIG. 4 is an example of a networked environment including a sensor and tire identification (ID) tag that are in communication with each other according to various embodiments of the present invention.
FIG. 5 is a sequence diagram illustrating an example of functionality in the network environment of FIG. 4 according to various embodiments of the present invention.

### DEFINITIONS

"Innerliner" means the layer or layers of elastomer or other material that form the inside surface of a tubeless tire and that contain the inflating gas within the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

### DETAILED DESCRIPTION OF PREFERRED EMBODIMENTS OF THE INVENTION

The present invention relates to programming tire sensors according to various embodiments. Tire sensors can be programed with tire identification data, which can be unique to the tire in which the tire sensor is attached. However, if a tire sensor becomes defective during the service life of the tire, a replacement sensor may be required. Traditionally, a tire sensor is externally programmed with the unique tire identification data and/or other pertinent data before entering service. Externally programing a replacement sensor is an inherently manual, error prone process, which can raise data integrity and safety concerns. Therefore, it would be beneficial to be able to automatically program a sensor with the tire identification data and/or other pertinent data.

In various examples, an identification tag device (e.g., radio frequency identification (RFID) tag) stores tire information data and/or other data that is unique to a given tire. In various examples, the identification tag device can be attached to or otherwise contained within a tire-integrated sensor mount configured to support a sensor. In various examples, the identification tag device is configured to transmit tire identification data and/or other data stored by the identification tag device to a sensor when the sensor is attached to or otherwise supported by the tire-integrated sensor mount. Accordingly, the sensor can obtain the tire identification data associated with the tire on which the sensor is mounted, thereby allowing the sensor to associate collected sensor data (e.g., pressure, temperature, etc.) with the tire identification data that is unique to the tire. It should be noted that although the discussion of the invention relates to pneumatic tires, the invention is not limited to pneumatic tires and can apply to all types of tires, including pneumatic and non-pneumatic tires.

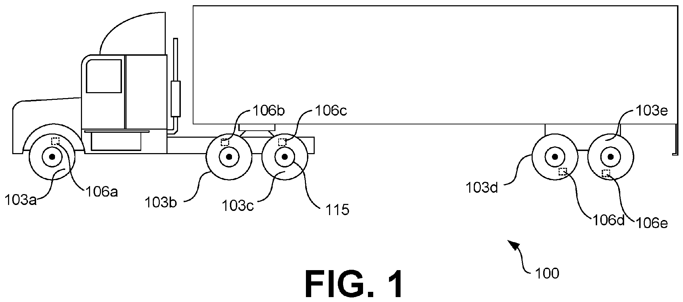

With reference to FIG. 1, a vehicle 100 is shown with one or more tires 103 (e.g., 103a, 103b, 103c, 103d, 103e). Although illustrated and described as pneumatic tires, it is noted that the tires 103 are not limited to pneumatic tires and can apply to all types of tires, including pneumatic and non-pneumatic tires Each tire 103 includes a sensor 106 (e.g., 106a, 106b, 106c, 106d, 106e). In various examples, the sensor 106 is mounted on each tire 103 for the purpose of detecting certain real-time parameters of the tire 103, such as tire pressure and tire temperature. In various examples, the sensor 106 can comprise at least one of a pressure sensor to sense the inflation pressure within a cavity of the tire, a temperature sensor to measure a temperature of the tire, an accelerometer for measuring acceleration of a wheel on which the tire 103 is mounted, a revolution counter to measure a revolution time of the wheel, and/or other types of sensors.

In some embodiments, the sensor 106 is a component of or comprises a tire pressure monitoring system (TPMS) module or sensing unit. In some aspects, each one of the tires 103 on the vehicle 100 includes one or more of the sensors 106. While the vehicle 100 is depicted as a commercial truck, the vehicle 100 may comprise any type of vehicle that employs tires where the commercial truck is presented as an example. To this end, the vehicle 100 may comprise other vehicles falling into various categories such as passenger vehicles, off-road vehicles, and the like, in which such vehicles include a greater or lesser number of tires 103 than are shown in FIG. 1.

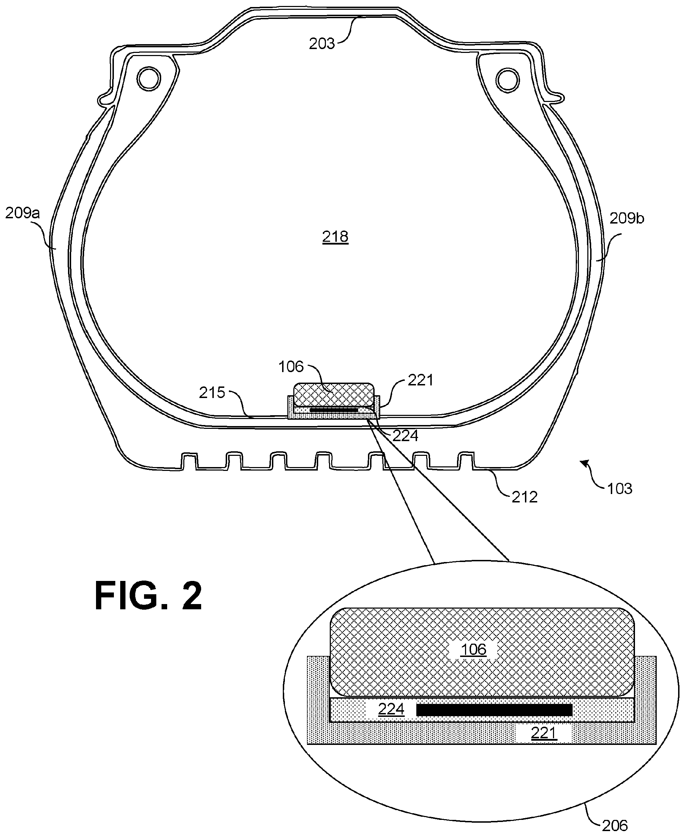

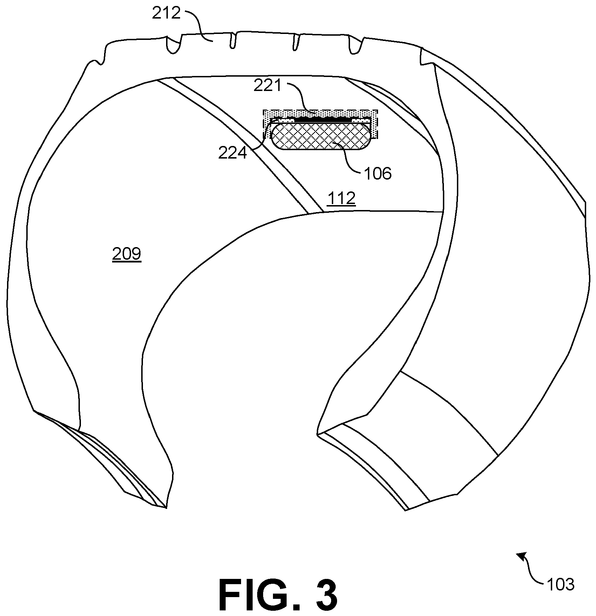

Turning now to FIGS. 2 and 3, shown are cross-sectional views of a tire 103, where a sensor mount assembly is mounted on the inside of the tire 103. In particular, FIG. 2 illustrates a cross-sectional view of a tire 103 on a wheel 203, where a sensor mount assembly 206 is mounted on the inside of the tire 103. FIG. 3 illustrates a cross-sectional view of a tire 103 without the wheel 203, where a sensor mount assembly 206 is mounted on the inside of the tire 103. The tires 103 are of conventional construction, and each tire is mounted on a respective wheel 203 as known to those skilled in the art. Each tire 103 includes a pair of sidewalls 209 (e.g., 209a, 209b) that extend to a circumferential tread 212. An innerliner 215 is disposed on the inner surface of the tire 103, and when the tire is mounted on the wheel 203, an internal cavity 218 is formed, which is filled with a pressurized medium, such as air.

In various examples, the sensor mount assembly 206 comprises a sensor mount 221, a tire identification (ID) tag 224, and a sensor 106. In some examples, the sensor 106 can be detachably attached from the sensor mount 221. For example, if a sensor 106 becomes defective during a service life (e.g., life of a tire 103), the sensor 106 may need to be replaced. As such, the sensor 106 can be detached or otherwise removed from the sensor mount 221 to allow for the placement of a replacement sensor 106. Accordingly, in some examples, the sensor mount assembly 206 can comprise the sensor mount 221 and the tire ID tag 224 without the sensor 106.

As shown in FIG. 2, the sensor mount assembly 206 comprises the tire ID tag 224 affixed to or otherwise integrated or contained within the sensor mount 221. In various examples, the sensor 106 can be attached to or mounted on the sensor mount 221 such that the sensor 106 engages with or abuts an inner surface of the sensor mount 221. In some examples, the sensor 106 is mechanically mounted to the sensor mount 221. In other examples, the sensor 106 is attached to the sensor mount 221 via an adhesive or other suitable form of attachment. It should be noted that the positioning of the tire ID tag 224 and the sensor 106 within the sensor mount assembly 206 are such that the sensor 106 can communicate with the tire ID tag 224 in accordance to the embodiments of the invention.

The sensor mount 221 is designed and configured to support a sensor 106 that detects certain real-time parameters of the tire 103, such as tire pressure and tire temperature. It should be noted that the size and shape of the sensor mount 221 is not limited to the size and shape of the sensor mount 221 of FIG. 2 and can be of any suitable size and shape such that a sensor 106 can be attached to and supported by the sensor mount 221. In various examples, the sensor mount 221 is attached to or integrated within the innerliner 215 and/or other components of the tire 103. For example, the sensor mount 221 can be attached to the tire 103 via an adhesive or other suitable type of attachment means. In other examples, the sensor mount 221 is integrated within one or more components of the tire 109. In some examples, the sensor mount 221 can be molded into the one or more components of the tire 109 during the manufacturing of the tire 109. In some examples, the sensor mount 221 can be formed from a material that is similar to and/or the same of that of the innerliner 215 and/or other tire components. In other examples, the sensor mount can be formed from plastic and/or other suitable types of materials so long as the sensor mount 221 can support the sensor 106 during the operation of the tire 103.

In various examples, the tire ID tag 224 comprises a conventional radio frequency identification (RFID) tag device. In some examples, the tire ID tag 224 is in a dipole configuration although other tag configurations may be employed if so desired. The tire ID tag 224 is of a general type including a substrate supporting an IC (integrated circuit) package and having conductive coiled antenna arms. Such a tag is shown and described in U.S. Pat. No. 8,441,355 hereby incorporated herein in its entirety by reference.

In various examples, the tire ID tag 224 can store tire information that is unique to the tire 103 on which the tire ID tag 224 is mounted. The tire information can include a tire identifier (ID), manufacturing information for the tire 103 (e.g., model number, manufacturer name, etc.), size information (e.g., rim size, width, and outer diameter), manufacturing location, manufacturing date, a treadcap code that includes or correlates to a compound identification, a mold code that includes or correlates to a tread structure identification, and/or other information. The vehicle tire information may also include a service history or other information to identify specific features and parameters of each tire 103. In various examples, the tire ID tag 224 is operable to wirelessly transmit the tire identification data to the sensor 106 and/or other remote receiver.

In various examples, the sensor 106 is mounted on a tire 103 for the purpose of detecting certain real-time parameters of the tire 103, such as tire pressure and tire temperature. In various examples, the sensor 106 can comprise at least one of a pressure sensor to sense the inflation pressure within a cavity of the tire, a temperature sensor to measure a temperature of the tire, an accelerometer for measuring acceleration of a wheel on which the tire 103 is mounted, a revolution counter to measure a revolution time of the wheel, and/or other types of sensors.

In various examples, the sensor 106 comprises a processor and memory to store vehicle tire information for each specific tire 103. For example, the tire vehicle tire information can include a tire identifier (ID), manufacturing information for the tire 103 (e.g., model number, manufacturer name, etc.), size information (e.g., rim size, width, and outer diameter), manufacturing location, manufacturing date, a treadcap code that includes or correlates to a compound identification, a mold code that includes or correlates to a tread structure identification, and/or other information. The vehicle tire information may also include a service history or other information to identify specific features and parameters of each tire 103. In various examples, the sensor 106 is configured to wirelessly communicate with the tire ID tag 224 to receive the tire identification data from the tire ID tag 224.

The sensor 106 further includes an antenna for wirelessly transmitting measured parameters and tire information data to a remote processor for analysis, such as a processor integrated into a vehicle computing device, a Controller Area Network (CAN) bus associated with the vehicle 100, and/or a cloud computing device. According to various embodiments, each one of the tires 103 on the vehicle 100 may include one or more of the sensors 106.

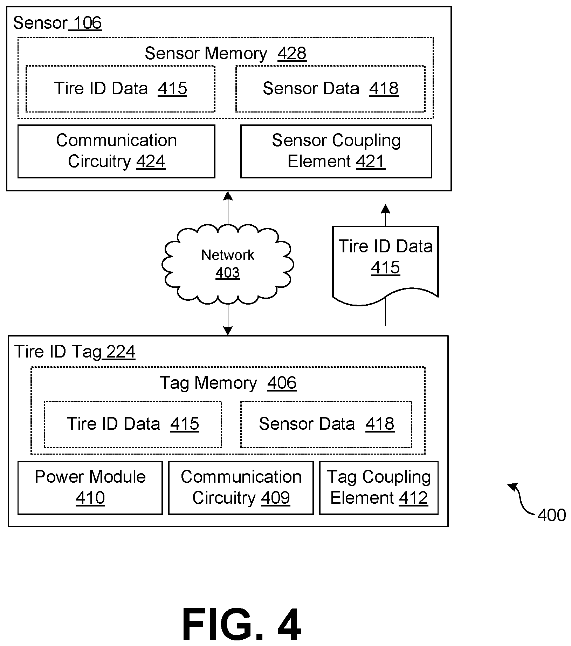

Turning now to FIG. 4, shown is a networked environment 400 according to various embodiments. The networked environment 400 includes a sensor 106 and a tire ID tag 224 which are in data communication with each other via a network 403.

In various examples, the network 309 can include a local area network (LAN) and can include wired or wireless components or a combination thereof. Wireless networks can include Institute of Electrical and Electronic Engineers (IEEE) 802.11 wireless networks (i.e., WI-FI^{®}), BLUETOOTH^{®} networks, radio transmission networks, microwave transmission networks, as well as other networks relying on radio broadcasts. The network 403 can also include a combination of two or more networks 403.

In various examples, the tire ID tag 224 comprises a conventional radio frequency identification (RFID) tag device. For example, the tire ID tag 224 can comprise a memory 406, communication circuitry 409 (e.g., transmitter, receiver, transceiver, etc.), a power module 410, and a coupling element 412 (e.g., antenna or coil).

The memory 406 can comprise tire ID data 415, sensor data 418, and/or other data. The tire ID data 415 can include a tire identifier (ID), manufacturing information for the tire 103 (e.g., model number, manufacturer name, etc.), size information (e.g., rim size, width, and outer diameter), manufacturing location, manufacturing date, a treadcap code that includes or correlates to a compound identification, a mold code that includes or correlates to a tread structure identification, and/or other information. The vehicle tire information may also include a service history or other information to identify specific features and parameters of each tire 103.

The sensor data 418 can include information collected by the sensor 106. For example, the sensor 106 can collect real-time parameters of the tire 103, such as tire pressure, tire temperature, acceleration, revolutions, and/or other parameter associated with the tire. In various examples, the sensor 106 can comprise at least one of a pressure sensor to sense the inflation pressure within a cavity of the tire, a temperature sensor to measure a temperature of the tire, an accelerometer for measuring acceleration of a wheel on which the tire 103 is mounted, a revolution counter to measure a revolution time of the wheel, and/or other types of sensors.

In various examples, the sensor data 418 includes data that has been collected by a sensor 106 that is no longer in communication with the tire ID tag 224. For example, if a sensor 106 becomes defective during a life service of a given tire 103, the sensor 106 can be replaced with a replacement sensor 106. In some examples, the sensor data 418 stored in the tire ID tag 224 can correspond to events or collected data associated with the prior sensor 106 prior to its malfunction and can be transmitted to the replacement sensor 106 or other remote receiver, as can be appreciated.

In the example of an RFID tag, the memory 406 and communication circuitry 409 can be implemented on an RFID chip. In various examples, a portion of the tire ID tag 224 (e.g., RFID chip) comprising the communication circuitry 409 and/or memory 406 can be contacted to the coupling element 412 or it may have an on-chip coil, which can be inductively coupled to yet another coil, to one or more antennas tuned to an operating RF-frequency or to possible RF-frequencies of the sensor 106, or the coupling element 412. For example, the coupling element 412 can be tuned to an operating frequency of the sensor 106, for example, to one of the Industrial, Scientific and Medical bands (ISM) as, for example, 315 MHz, 434 MHz, etc.

In various examples, the communication interface for the communication circuitry 409 comprises an I2C or SPI commercially available for integrated circuit (IC) incorporation and use. "I2C" or "SPI" as used herein represents the inter-integrated circuit (I2C) developed by Philips (now NXP) Semiconductor, Eindhoven, Netherlands, or serial peripheral interface (SPI) developed by Motorola, Schaumberg, Ill., respectfully. In various examples, the communication circuitry 409 of the tire ID tag 224 is coupled to a power module 410, which is further coupled to the tag coupling element 412 of the tire ID tag 224. The power module 410 is configured to power the tire ID tag 224 by receiving energy through the sensor coupling element 421 from the sensor 106. That is to say the tire ID tag 224 comprises a contact to the coupling element 412 or it may comprise an on-chip coil inductively coupled to the coupling element 412.

In various examples, the sensor 106 is configured to detect certain real-time parameters of the tire 103, such as tire pressure and tire temperature. In various examples, the sensor 106 can comprise at least one of a pressure sensor to sense the inflation pressure within a cavity of the tire, a temperature sensor to measure a temperature of the tire, an accelerometer for measuring acceleration of a wheel on which the tire 103 is mounted, a revolution counter to measure a revolution time of the wheel, and/or other types of sensors.

In various examples, the sensor 106 comprises a processor, sensor communication circuitry 424, memory 428, a sensor coupling element 421, and/or other components. The sensor communication circuitry 424 can comprise a transmitter, receiver, transceiver, and/or other type of communication component that allows the sensor to communicate with the tire ID tag 224 and/or other devices. For example, the sensor communication circuitry 424 can comprise an antenna for wirelessly transmitting measured parameters and tire information data to a remote processor for analysis, such as a processor integrated into a vehicle computing device, a Controller Area Network (CAN) bus associated with the vehicle 100, and/or a cloud computing device. The sensor memory 428 stores tire ID data 415, sensor data 418, and/or other data that is specific to a given tire 103.

The sensor coupling element 421 (e.g., an antenna, a coil, etc.) is configured to provide power (e.g., RF power) to the tire ID tag 224 to enable provision of tire ID data 415. For example, the sensor 106 can comprise a dedicated output to provide power to the tire ID tag 224, where the sensor coupling element 421 can also be dedicated or used for multiple purposes among which is the provision of the power to the tire ID tag 224. In some examples, the communication circuitry 424 of the sensor 106 can be coupled to the sensor coupling element 421 (e.g., the same or another antenna or coil) and which is configured to transmit information related to a tire pressure to a receiver device of a vehicle 100, the tire ID tag 224, and/or other device.

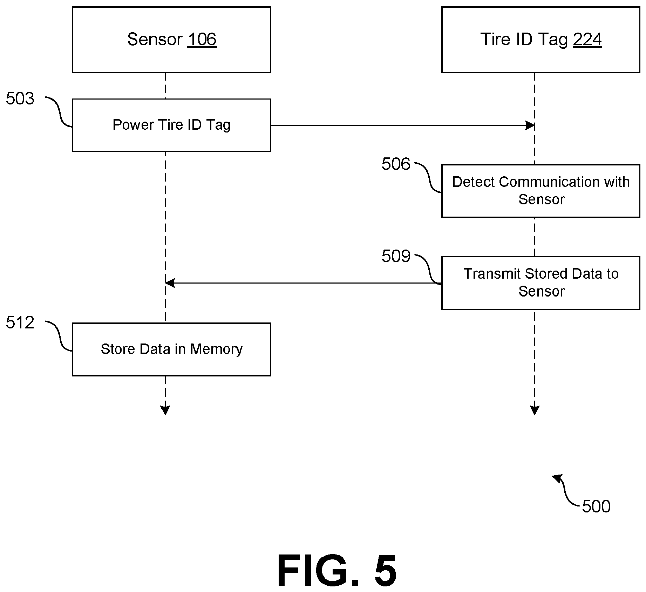

Moving on to FIG. 5, shown is an example sequence diagram 500 that provides an example of the operation of the components of the network environment 400. It is understood that the sequence diagram 500 of FIG. 5 provides merely an example of the many different types of functional arrangements that can be employed to implement the operation of the depicted portion of the network environment 400. As an alternative, the sequence diagram 500 of FIG. 5 can be viewed as depicting an example of elements of a method implemented within the network environment 400. In particular, the sequence diagram 500 of FIG. 5 depicts the functionality associated with the establishment and exchange of information between a sensor 106 and a tire identification tag 224. For example, the tire identification tag 224 includes tire ID data 415 stored in a memory 406. When a sensor 106 (e.g., original or replacement) is attached to the tire integrated mount 221 of a tire 103, the sensor 106 can power the tire identification tag 224 that is contained within or coupled to the tire integrated mount 221 and receive tire ID data 415, sensor data 418, and/or other data that is stored on the tire ID tag 224 from the tire ID tag 224.

Beginning with box 503, the sensor 106 provides power to the tire ID tag 224. For example, when the sensor 106 is supported by the tire integrated tire mount 221 of the tire, the sensor coupling element 421 (e.g., an antenna, a coil, etc.) of the sensor 106 provides power (e.g., RF power) to the tire ID tag 224 to enable provision of tire ID data 415. For example, the sensor 106 can comprise a dedicated output to provide power to the tire ID tag 224, where the sensor coupling element 421 can also be dedicated or used for multiple purposes among which is the provision of the power to the tire ID tag 224.

At box 506, the tire ID tag 224 detects the communication with the sensor 106. For example, the coupling element 412 of the tire ID tag 224 can be coupled to the sensor coupling element 421 upon placement of the sensor 106 in operational proximity to the tire ID tag 224. Accordingly, the tag coupling element 412 can receive energy (e.g., power) from the sensor coupling element 421. As such, the power module 410 of the tire ID tag 224 that is coupled to the sensor coupling element 421 can power the tire ID tag 224 using the energy received from the sensor coupling element 421, thereby detecting the sensor 106.

At box 509, the tire ID tag 224 transmits the tire ID data 415, sensor data 418, and/or other data stored in the tag memory 406 to the sensor memory 428. In various examples, the communication circuitry 409 of the tire ID tag 224 is configured to transmit the data in the tag memory 406 to communication circuitry 424 of the sensor 106.

At box 512, the sensor 106 stores the received data in the sensor memory 428. In various examples, as the sensor 106 collects parameter data associated with the tire and transmits the parameter data to a remote device, the sensor 106 can associate the collected data using the tire ID data 415 obtained from the tire ID tag 224. Thereafter, this portion of the process proceeds to completion.

## Claims

1. A tire comprising a sensor mount (201) affixed to the tire (103) or being integrated within the tire (103), the sensor mount (201) being configured to support a sensor (106); and an identification tag (224), preferably a radio frequency identification (RFID) tag, affixed to an inner wall of the sensor mount (201), the identification tag (224) comprising tire identification data (415) and/or being configured to transmit tire identification data (415) associated with the tire (103) to the sensor (106), **characterized in that** the tire identification data (415) comprises sensor data (418) associated with another sensor previously attached to the sensor mount (201) and in communication with the identification tag (224).

2. The tire of claim 1 wherein the sensor mount (201) supports the sensor (106), wherein the sensor (106) is configured to measure one or more tire parameters of the tire (103) and wherein the identification tag (224) is in data communication with the sensor (106).

3. The tire of claim 2, wherein the sensor (106) is detachably attached to the sensor mount (201).

4. The tire of at least one of the previous claims 2 or 3, wherein the sensor (106) comprises a sensor coupling element (421) configured to power the identification tag (224) when the sensor (106) is attached to the sensor mount (201), the sensor coupling element (421) preferably comprising an antenna or a coil.

5. The tire of at least one of the previous claims, wherein the tire identification data (415) comprises at least one of a tire identifier (ID), manufacturing information for the tire (103), size information of the tire (103), manufacturing location, manufacturing date, a treadcap code that correlates to a compound identification, or a mold code that correlates to a tread structure identification.

6. The tire of at least one of the previous claims, wherein the sensor mount (201) is integrated or at least partially integrated within an innerliner (215) of the tire (103).

7. The tire of at least one of the previous claims 2 to 6, wherein the sensor (106) comprises a replacement sensor.

8. The tire of at least one of the previous claims 2 to 7, wherein the sensor (106) comprises a first coupling element and the identification tag (224) comprises a second coupling element, and the first coupling element being configured to provide power to the second coupling element based at least in part on a proximity between the first coupling element and the second coupling element.

9. The tire of at least one of the previous claims, wherein the identification tag (224) is configured to transmit the tire identification data (415) to a sensor (106) in response to the sensor (106) being attached to the sensor mount (201).

10. The tire of at least one of the previous claims, wherein the identification tag (224) is contained within the sensor mount (201).

11. A method comprising:
initiating communication between a sensor (106) and an identification tag (224) affixed to a mount (201) supporting the sensor (106), the identification tag (224) comprising tire identification data (415) of a tire (103); and
transmitting the tire identification data (415) from the identification tag (224) to the sensor (106);
wherein the sensor (106) is a replacement sensor and wherein the method further comprises transmitting, by the identification tag (224), sensor data (418) associated with another sensor previously attached to the mount (201).

12. The method of claim 11, further comprising storing the tire identification data (415) in a memory of the sensor (106).

13. The method of claim 11 or 12, wherein the sensor (106) collects parameter data associated with the tire (103) and associates the parameter data with the tire (103) based at least in part on the tire identification data (415); and/or wherein the tire identification data (415) comprises at least one of a tire identifier (ID), manufacturing information for the tire (103), size information of the tire (103), manufacturing location, manufacturing date, a treadcap code that correlates to a compound identification, or a mold code that correlates to a tread structure identification.

14. The method of claim 11, 12 or 13, wherein the sensor (106) is detachably attached to the mount (201), and the identification tag (224) is contained within or affixed to the mount (201).

## Patentansprüche

1. Reifen, welcher das Folgende umfasst: eine Halterung (201) für einen Sensor, die an dem Reifen (103) befestigt oder in den Reifen (103) integriert ist; wobei die Halterung (201) für einen Sensor derart ausgestaltet ist, dass sie einen Sensor (106) trägt; sowie ein Identifikationsetikett (224), vorzugsweise ein Radiofrequenz-Identifikationsetikett (RFID), welches an einer Innenwand der Halterung (201) für einen Sensor befestigt ist ; wobei das Identifikationsetikett (224) Reifenidentifikationsdaten (415) umfasst und/oder derart ausgestaltet ist, dass es Reifenidentifikationsdaten (415), die dem Reifen (103) zugeordnet sind, an den Sensor (106) überträgt, **dadurch gekennzeichnet, dass** die Reifenidentifikationsdaten (415) Sensordaten (418) umfassen, die einem anderen Sensor zugeordnet sind, der zuvor an der Halterung (201) für einen Sensor befestigt und mit dem Identifikationsetikett (224) in Verbindung gebracht war.

2. Reifen nach Anspruch 1, wobei die Halterung (201) für einen Sensor den Sensor (106) trägt; wobei der Sensor (106) derart ausgestaltet ist, dass er einen oder mehrere Parameter des Reifens (103) misst; und wobei das Identifikationsetikett (224) zur Datenübertragung mit dem Sensor (106) in Kontakt gebracht wird.

3. Reifen nach Anspruch 2, wobei der Sensor (106) lösbar an der Halterung (201) für einen Sensor befestigt ist.

4. Reifen nach zumindest einem der Ansprüche 2 oder 3, wobei der Sensor (106) ein Element (421) zur Kopplung mit dem Sensor umfasst, das so konfiguriert ist, dass es das Identifikationsetikett (224) mit Energie versorgt, wenn der Sensor (106) an der Halterung (201) für einen Sensor befestigt ist; wobei das Element (421) zur Kopplung mit dem Sensor vorzugsweise eine Antenne oder eine Spule umfasst.

5. Reifen nach zumindest einem der vorhergehenden Ansprüche, wobei die Reifenidentifikationsdaten (415) zumindest ein Datenelement umfassen, das aus einer Reifenkennung (ID), Informationen über die Herstellung des Reifens (103), Informationen über die Größe des Reifens (103), einem Herstellungsort, einem Code des Laufflächenlauftreifens, der mit einer Mischungskennung korreliert ist, oder einem Code der Form, der mit einer Laufflächenstrukturkennung korreliert ist, ausgewählt ist.

6. Reifen nach zumindest einem der vorhergehenden Ansprüche, wobei die Halterung (201) für einen Sensor zumindest teilweise innerhalb einer Innenschicht des Reifens (103) integriert oder zumindest teilweise in diese integriert ist.

7. Reifen nach zumindest einem der vorhergehenden Ansprüche 2 bis 6, wobei der Sensor (106) einen Ersatzsensor umfasst.

8. Reifen nach zumindest einem der vorhergehenden Ansprüche 2 bis 7, wobei der Sensor (106) ein erstes Kopplungselement umfasst und das Identifikationsetikett (224) ein zweites Kopplungselement umfasst; und wobei das erste Kopplungselement derart ausgestaltet ist, dass es Energie für das zweite Kopplungselement bereitstellt, zum Teil basierend auf einer Nähe zwischen dem ersten Kopplungselement und dem zweiten Kopplungselement.

9. Reifen nach zumindest einem der vorhergehenden Ansprüche, wobei das Identifikationsetikett (224) derart ausgestaltet ist, dass es an einen Sensor (106) die Reifenidentifikationsdaten (415) als Antwort auf die Tatsache überträgt, dass der Sensor (106) an der Halterung (201) für einen Sensor befestigt ist.

10. Reifen nach zumindest einem der vorhergehenden Ansprüche, wobei das Identifikationsetikett (224) innerhalb der Halterung (201) für einen Sensor enthalten ist.

11. Verfahren, welches Folgendes umfasst:
das Auslösen einer Verbindung zwischen einem Sensor (106) und einem Identifikationsetikett (224), das an einer Halterung (201) für einen Sensor befestigt ist, die den Sensor (106) stützt; wobei das Identifikationsetikett (224) Reifenidentifikationsdaten (415) für einen Reifen (103) umfasst; und
das Übertragen der Reifenidentifikationsdaten (415) von dem Identifikationsetikett (224) an den Sensor (106) ;
wobei der Sensor (106) einen Ersatzsensor darstellt, und wobei das Verfahren ferner das Übertragen über das Identifikationsetikett (224) von Sensordaten (418), die mit einem zuvor an dem Träger (201) angebrachten Sensor verbunden sind, umfasst.

12. Verfahren nach Anspruch 11, welches ferner umfasst, dass die Reifenidentifikationsdaten (415) in einem Speicher des Sensors (106) gespeichert werden.

13. Verfahren nach Anspruch 11 oder 12, wobei der Sensor (106) Parameterdaten sammelt, die dem Reifen (106) zugeordnet sind, und die Parameterdaten zumindest teilweise auf Basis von Reifenidentifikationsdaten (415) dem Reifen (106) zuordnet; und/oder wobei die Reifenidentifikationsdaten (415) zumindest ein Datenelement umfassen, das aus einer Reifenkennung (ID), Informationen über die Herstellung des Reifens (103), Informationen über die Größe des Reifens (103), einem Herstellungsort, einem Code des Laufflächenlauftreifens, der mit einer Mischungskennung korreliert ist, oder einem Code der Form, der mit einer Laufflächenstrukturkennung korreliert ist, ausgewählt ist.

14. Verfahren nach Anspruch 11, 12 oder 13, wobei der Sensor (106) lösbar an dem Träger (201) befestigt ist und das Identifikationsetikett (224) innerhalb des Trägers (201) enthalten oder an diesem befestigt ist.

## Revendications

1. Bandage qui comprend un support (201) pour un capteur qui est fixé au bandage (103) ou qui est intégré au sein du bandage (13) ; dans lequel le support (201) pour un capteur est configuré d'une manière telle qu'il supporte un capteur (106) ; ainsi qu'une étiquette d'identification (224), de préférence une étiquette d'identification par radiofréquence (RFID), qui est fixée à une paroi interne du support (201) pour un capteur ; dans lequel l'étiquette d'identification (224) comprend des données d'identification de bandage (415) et/ou est configurée d'une manière telle qu'elle transmet au capteur (106) des données d'identification de bandage (415) qui sont associées au bandage (103), **caractérisé en ce que** les données d'identification de bandage (415) comprennent des données de capteur (418) qui sont associées à un autre capteur qui a été fixé auparavant au support (201) pour un capteur et mis en communication avec l'étiquette d'identification (224).

2. Bandage selon la revendication 1, dans lequel le support (201) pour un capteur supporte le capteur (106) ; dans lequel le capteur (106) est configuré d'une manière telle qu'il mesure un ou plusieurs paramètres du bandage (103) ; et dans lequel l'étiquette d'identification (224) est mise en contact pour une transmission de données avec le capteur (106).

3. Bandage selon la revendication 2, dans lequel le capteur (106) est fixé de manière amovible au support (201) pour un capteur.

4. Bandage selon au moins une des revendications 2 ou 3, dans lequel le capteur (106) comprend un élément (421) destiné au couplage avec le capteur, qui est configuré d'une manière telle qu'il alimente en énergie l'étiquette d'identification (224) lorsque le capteur (106) est fixé au support (201) pour un capteur ; dans lequel l'élément (421) destiné au couplage avec le capteur comprend de préférence une antenne ou une bobine.

5. Bandage selon au moins un des revendications précédentes, dans lequel les données d'identification de bandage (415) comprennent au moins une donnée qui est choisie parmi un identificateur de bandage (ID), des informations concernant la fabication du bandage (103), des informations concernant la dimension du bandage (103), un endroit de fabrication, un code de chape de bande de roulement qui est mis en corrélation avec une identification de mélange, ou un code de moulage qui est mis en corrélation avec une identification de la structure de bande de roulement.

6. Bandage selon au moins un des revendications précédentes, dans lequel le support (201) pour un capteur est intégré ou intégré au moins en partie au sein d'un calandrage intérieur fu bandage (103).

7. Bandage selon au moins un des revendications précédentes 2 à 6, dans lequel le capteur (106) comprend un capteur de remplacement.

8. Bandage selon au moins un des revendications précédentes 2 à 7, dans lequel le capteur (106) comprend un premier élément de couplage et l'étiquette d'identification (224) comprend un deuxième élément de couplage ; et dans lequel le premier élément de couplage est configuré d'une manière telle qu'il procure de l'énergie au deuxième élément de couplage en se basant en partie sur une proximité entre le premier élément de couplage et le deuxième élément de couplage.

9. Bandage selon au moins un des revendications précédentes, dans lequel l'étiquette d'identification (224) est configurée d'une manière telle qu'elle transmet à un capteur (106) les données d'identification de bandage (415) en réponse au fait que le capteur (106) est fixé au support (201) pour un capteur.

10. Bandage selon au moins un des revendications précédentes, dans lequel l'étiquette d'identification (224) est contenue au sein du support (201) pour un capteur.

11. Procédé qui comprend le fait de :
déclencher une mise en communication entre un capteur (106) et une étiquette d'identification (224) qui est fixée à un support (201) pour un capteur qui supporte le capteur (106) ; dans lequel l'étiquette d'identification (224) comprend des données d'identification de bandage (415) pour une bandage (103) ; et
transmettre les données d'identification de bandage (415) à partir de l'étiquette d'identification (224) au capteur (106) ;
dans lequel le capteur (106) représente un capteur de remplacement et dans lequel le procédé comprend en outre le fait de transmettre, par l'intermédiaire de l'étiquette d'identification (224), des données de capteur (418) qui sont associées à un capteur qui a été fixé auparavant au support (201).

12. Procédé selon la revendication 11, qui comprend en outre le fait de stocker les données d'identification de bandage (415) dans une mémoire du capteur (106).

13. Procédé selon la revendication 11 ou 12, dans lequel le capteur (106) collecte des données de paramètres qui sont associées au bandage (106) et associe les données de paramètres au bandage (106) en se basant au moins en partie sur les données d'identification du bandage (415) ; et/ou dans lequel les données d'identification de bandage (415) comprennent au moins une donnée qui est choisie parmi un identificateur de bandage (ID), des informations concernant la fabication du bandage (103), des informations concernant la dimension du bandage (103), un endroit de fabrication, un code de chape de bande de roulement qui est mis en corrélation avec une identification de mélange, ou un code de moulage qui est mis en corrélation avec une identification de la structure de bande de roulement.

14. Procédé selon la revendication 11, 12 ou 13, dans lequel le capteur (106) est fixé de manière amovible au support (201) et l'étiquette d'identification (224) est contenue au sein du support (2021) ou est fixée à ce dernier.
